(19) Europäisches Patentamt
European Patent Office
Office européen des brevets

(11) **EP 1 954 125 B1**

(12) **EUROPEAN PATENT SPECIFICATION**

(45) Date of publication and mention
of the grant of the patent:
**27.05.2020 Bulletin 2020/22**

(51) Int Cl.:
***A01N 25/00*** (2006.01)    ***A01N 43/16*** (2006.01)
***A01N 49/00*** (2006.01)    ***A01P 11/00*** (2006.01)

(21) Application number: **06794972.7**

(86) International application number:
**PCT/GB2006/050289**

(22) Date of filing: **15.09.2006**

(87) International publication number:
**WO 2007/031796 (22.03.2007 Gazette 2007/12)**

(54) **CONTROL OF RODENTS**

BEKÄMPFUNG VON NAGETIEREN

LUTTE CONTRE LES RONGEURS

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **15.09.2005 GB 0518813**

(43) Date of publication of application:
**13.08.2008 Bulletin 2008/33**

(73) Proprietor: **BASF plc
Cheadle Hulme
Cheadle
Cheshire SK8 6QG (GB)**

(72) Inventors:
• **HUGHES, Sharon
Widnes Cheshire WA8 8TJ (GB)**
• **TWYDELL, Roland
Widnes Cheshire WA8 8TJ (GB)**

(74) Representative: **BASF IP Association
BASF SE
G-FLP-C006
67056 Ludwigshafen (DE)**

(56) References cited:
**EP-A- 1 279 334        WO-A-94/22297
US-A1- 2004 031 189**

• **DATABASE WPI Week 200301 Derwent
Publications Ltd., London, GB; AN 2003-003185
XP002470086 -& JP 2002 179502 A (EARTH
SEIYAKU KK) 26 June 2002 (2002-06-26)**

**Description**

The present invention is concerned with the control of rodents, particularly infestations of rats or mice. It is, further, concerned with non-bait particulate food for rodents for use in mixtures with particulate bait and with such mixtures which may be used in rodent control.

It is in the nature of rats and mice to forage for food, i.e. to roam in search of food which is palatable and/or which offers a desirable 'chew' or 'bite' texture. Although a rat or a mouse may show an initial interest in a palatable bait which has been placed in its run, it may, because of its natural behaviour, lose interest in the bait, after taking only a small amount, in favour of looking for something different.

Some currently-available rodenticides are effective because their lethal dose is achieved by accumulation inside the body of the rodent over a period of time such as where the rodent has taken bait on several occasions. Such rodenticides have been developed to overcome 'bait-shyness', which term is used to describe the avoidance by rodents of food sources which have made them sick.

JP 2002 179502 describes rat baits in the form of e.g. granulates, blocks or balls comprising a feed component and an attractive component, e.g. cereals, such as wheat, and prawns or krill.

WO 1994/22297 A discloses a method of offering discretely different baits to insects or rodents, e.g. in bait stations. The baits are for instance granules differing in at least one component and/or in component proportion, or the baits have different forms, e.g. granule and paste.

EP 1 279 334 describes combined rat baits comprising rodenticide for baiting stations comprising a palatable paste component and a solid component for being gnawed, optionally inert solid components which can be gnawed may be present.

US 2004/031189 A1 discloses a rodent bait delivery system comprising a bait module which carries a poison portion, an olfactory attractor, and a visual attractor.

It is desirable, in methods of rodent control, to encourage a rodent to take a greater amount of bait in a sitting. This has been attempted, for instance, by improving the palatability, to the rodent, of the bait. However, attempts to encourage a greater take of the bait are frustrated by the natural desire of the rodent to forage for, and investigate, alternative and potentially more interesting sources of food.

The technical problem faced by the inventors is to provide a bait-system for rodents wherein the bait retains its initial attraction to the rodents but which system is adapted to provide ongoing interest for the rodents such that their natural desire to forage is satisfied. This technical problem is solved by the present invention.

Accordingly, the present invention provides a particulate mixture for use in the control of rodents which comprises a mixture of a plurality of bait particles and a plurality of non-bait particles, wherein each bait particle comprises matter edible by a rodent and a rodenticide and wherein each non-bait particle comprises matter edible by a rodent and has a flavour different from the flavour of a bait particle and wherein the non-bait particles are distinguished from the bait particles by at least one physical characteristic selected from size, shape, surface texture and internal texture and wherein the non-bait particles are present in the mixture in an amount in the range of from 2.5 to 10% by weight, based on the combined weight of the bait particles and non-bait particles,
wherein the non-bait particles are extruded pellets comprising ground cereals,
wherein the non-bait particles contain from 5 to 4000 ppm of flavouring agent,
wherein the bait particles are cereal based, typically selected from whole wheat grain, cut wheat grain, oats, canary seed and cereal based pellets treated with a rodenticide.

The present invention also provides a method of increasing the consumption of bait particles by a rodent which bait particles comprise matter edible by a rodent and a rodenticide comprising mixing the bait particles to be presented to the rodent with non-bait particles which comprise matter edible by a rodent and having a flavour different from the flavour of the bait particles and wherein the non-bait particles are distinguished from the bait particles by at least one physical characteristic selected from size, shape, surface texture and internal texture,
wherein the non-bait particles are present in the mixture in an amount in the range of from 2.5 to 10% by weight, based on the combined weight of the bait particles and non-bait particles,
wherein the non-bait particles are extruded pellets comprising ground cereals,
wherein the non-bait particles contain from 5 to 4000 ppm of flavouring agent,
wherein the bait particles are cereal based, typically selected from whole wheat grain, cut wheat grain, oats, canary seed and cereal based pellets treated with a rotenticide.

From their research, the inventors have discovered that, surprisingly, the palatability and efficacy of a bait, provided in the form of a plurality of bait particles, is increased by including, in admixture with the plurality of bait particles, a plurality of non-bait particles which have a flavour different from the flavour provided on the bait particle and which are distinguished from the bait particles by at least one physical characteristic selected from size, shape, surface texture and internal texture. It has been discovered that this provision of a different flavour and, for instance, different shape or texture, in the bait-containing mixture encourages the natural foraging behaviour of the rodents but acts as an arrestant in that it provides ongoing interest for the feeding rodents such that interest in the bait itself is stimulated with the result that more bait is taken at one sitting by the rodents. We have found that the use of the present invention not only helps to overcome neophobia in rodents (i.e. their wariness or distrust of new food sources, such as when a bait is introduced into their area of activity) but also leads the rodents to consume a lethal dose of bait more quickly.

As used herein, the term "bait" means matter edible by a rodent which includes or contains at least one rodenticide. The term "non-bait", as used herein, means matter edible by a rodent and which does not include or contain any rodenticide. With no compromise of the definitions of "bait" and 'non-bait" given above intended, the words "comprises" and "comprising", as used herein, are intended to mean "includes" and "including", respectively, to the extent that the presence of one or more other materials is not excluded.

The non-bait particles are present in the mixture in an amount in the range of from 2.5 to 10% by weight based on the combined weight of the bait particles and non-bait particles. As the amount of non-bait particles in the mixture decreases below 2.5% by weight, the amount of bait particles consumed by a rodent in a sitting tends to fall and eventually approaches the 'take' that would be expected in the case where no non-bait particles are present. The amount of non-bait particles in the mixture should, preferably, therefore, not be lower than 2.5% by weight, based on the combined weight of bait particles and non-bait particles, in order that the non-bait achieves a good arrestant effect. As the amount of non-bait particles in the mixture increases above 10% by weight, the amount of bait particles consumed by a rodent in a sitting tends to fall, presumably because, as the non-bait becomes more plentiful in the mixture, its ability to stimulate interest in the bait starts to fall. We have found that better results are obtained if the amount of the non-bait particles in the mixture is in the range of from 3 to 7% by weight, based on the combined weight of the bait particles and non-bait particles in the mixture. Optimum take by a rodent has been found to occur when the amount of non-bait particles in the mixture is about 5% by weight, based on the combined weight of the bait particles and non-bait particles in the mixture. The bait particles may be granular and are based on natural grain selected from whole wheat grain, cut wheat grain, oats and canary seed, or may, alternatively, be extruded pellets formed by extruding a paste or meal containing ground or comminuted food, such as cereal, and water and then cutting the extrudate into pellets followed by drying. Such granular or pelleted material is treated with one or more rodenticidally-active agent in accordance with conventional procedures. According to a preferred embodiment, the bait particles are cut wheat grain (typically having a size of approximately 1.5-2mm by 1.5-2mm) which is treated with one or more rodenticidally-active agent. Any rodenticidally-active material may be used in the bait particles of the particulate mixture of the invention. The rodenticidally-active material may be an anticoagulant rodenticide or may be a non-anticoagulant rodenticide. Examples of anticoagulant rodenticides that may be used in the bait particles include one or more of difenacoum, brodifacoum, flocoumafen, bromadiolone, difethialone, warfarin, coumatetralyl, chlorophacinone, diphacinone, coumachlor, coumafuryl and pindone. A preferred anticoagulant rodenticide for use in the present invention is difenacoum. Examples of non-anticoagulant rodenticides that may be used in the bait particles of the particulate mixture according to the invention include vitamin D (ergocalciferol or cholecalciferol) and alphachlorolose. Preferably, the non-anticoagulant rodenticide is ergocalciferol or chlolecalciferol or a mixture thereof. Preferably, the bait particles are selected from whole grain wheat, cut wheat grain and extruded pellets of ground wheat which bait particles are treated with a rodenticide which, preferably, is difenacoum or vitamin D (ergocalciferol or cholecalciferol). Typically, the rodenticide used in the invention will be used in the form of a concentrate which additionally contains a human taste deterrent, e.g. denatonium benzoate. In such a case, it will be apparent that, ignoring any addition of extra flavouring agent to the non-bait particles, there will always be a difference in flavour between bait particles containing a human taste deterrent and the non-bait particles not containing this.

The non-bait particles, as described above, do not contain rodenticidally-active agent. They provide a flavour different from the flavour of the bait particles used in the mixture. In one embodiment, the non-bait particles are prepared by extruding a paste comprising ground cereal, preferably ground wheat, water and flavouring agent, cutting the extruded paste into pellets and subjecting the pellets to drying. Preferably, the cereal paste will also contain dextrose since this not only sweetens the pellet and, therefore, itself provides a flavour component to the pellet but also acts as a binder for the ground cereal such that the pellets retain integrity and resist crumbling. More preferably, the extruded pellets comprise, after drying, approximately 95% ground wheat and approximately 5% dextrose.

The flavouring agent will typically be one that also provides the non-bait particles with an odour, in addition to a flavour, different from that of the bait particles. We have found that good results are obtained using, as the flavouring agent for the non-bait particles, berries, e.g. a wildberry mixture; fruit, e.g. apple, banana, pear; meat, e.g. comminuted meat or a meat extract; faeces or a constituent of faeces, such as skatole; peppermint; vanilla; fish meal; yeast; chocolate and dried powdered crustacean. Preferably, the flavouring agent is chocolate or dried, powdered crustacean or their mixtures. Dried, powdered, crustacean is especially preferred.

The non-bait particles used in the particulate mixture of the invention will contain an amount of flavouring agent which is sufficient to achieve interest from the rodents and to confer, on the non-bait particles in the mixture, an arrestant effect. The non-bait particles contain from 5 to 4000 ppm of flavouring agent depending on the actual flavouring agent used. We have found that the optimum level of flavouring agent content in the non-bait particles does depend on the actual flavouring agent used since different flavouring agents provide different levels of flavour sensation and olfactory stimulation in rodents. The optimum content levels of some of the flavouring agents that may be used in the non-bait particles are as follows:-

| Flavouring agent | Optimum content (based on weight of non-bait particle) |
|---|---|
| skatole | 0.001% (10 ppm) |
| yeast | 0.002% (20 ppm) |
| wildberry | 0.0025% (25 ppm) |
| meat extract | 0.020% (200 ppm) |
| dried powdered crustacean | 0.030% (300 ppm) |
| chocolate | 0.200% (2000 ppm) |

It will be apparent, from the above, that the typical practical range of flavouring agent content of the non-bait particles depends on the actual flavouring agent used. For instance, it is possible to identify a typical practical range of flavouring agent content wherein the lower limit of the content range is the content which is sufficient to achieve a strong interest from the rodents and the upper limit of the content range is the point above which no significant further increase in arrestant effect is achieved. Thus, a typical content of skatole will be in the range of from 5 to 50 ppm, with about 10ppm being preferred. A typical content of wildberries will be in the range of from 10 to 150 ppm, with about 25 ppm being preferred. A typical content of meat extract will be in the range of from 100 to 700 ppm, with about 200 ppm being preferred. A typical content of dried powdered crustacean is in the range of from 150 to 900 ppm, with about 300 ppm being preferred. A typical content of chocolate will be in the range of from 500 to 4000 ppm, with about 2000 ppm being preferred.

As stated above, we have found that not only must the non-bait particles have a flavour different from the bait particles in the mixture but also that the non-bait particles must be distinguishable from the bait particles by at least one physical characteristic selected from size, shape, surface texture and internal texture. This distinction is essential so that the mixture of edible particles provides the rodents with variety to maintain their interest. Our research suggests that the rodents' natural desire to forage can substantially be satisfied if the non-bait particles used in the mixture of the invention have an appeal to all of the senses of taste, touch and sight and, preferably, also the sense of smell. Since rodents appear to investigate potential food by touch, for instance by picking up the food using their front paws, as well as by taste and/or odour, the non-bait particles will preferably be distinguishable from the bait particles by their shape and/or size and/or surface texture. Rodents are known to like a hard multi-edge shape to gnaw at and, thus, hardness, as well as shape and/or size and/or surface texture, should preferably also be taken into account in the non-bait particle design. If the bait particles comprise extruded pellets, and the non-bait particles also comprise extruded pellets, the shape and/or size of the bait particles and the shape and/or size of the non-bait particles should be different such that the rodents can distinguish between the bait particles and the non-bait particles. According to a preferred embodiment of the invention, the non-bait particles will be distinguishable from the bait particles because of their different size. We have found that we have obtained good results using non-bait particles in the form of extruded pellets having roughly a circular cross-section and having a length of from 8 to 12 mm and a diameter of about 4 mm which are distinguishable from bait particles based on whole wheat grain, cut wheat grain, oats, canary seed, or extruded pellets having similar dimensions to such whole or cut grains.

We have found that excellent results are obtained by using, in the control of rodents, a mixture of bait particles, selected from whole wheat grains and cut wheat grains treated with difenacoum, with a plurality of non-bait particles wherein the amount of non-bait particles in the mixture is from 3 to 7% by weight, preferably about 5% by weight, based on the total weight of the bait particles and non-bait particles and wherein the non-bait particles comprise dried, pelleted, extruded ground wheat and from 150 to 900 ppm, preferably about 300 ppm, of dried, powdered crustacean or from 500 to 4000 ppm, preferably about 2000 ppm, of chocolate. Preferably, the flavouring agent will, however, be dried powdered crustacean. Accordingly, this composition and the method of using it form preferred embodiments of the invention. It has, further, been discovered by the inventors, to their surprise, that rodents, particularly rats, show a preference for non-bait particles flavoured with dried, powdered crustacean compared to non-bait particles flavoured with other flavouring agents. To the knowledge of the inventors, this has not been disclosed in the prior art. Especially advantageous results may be achieved when the flavoured non-bait particulate food has at least one physical characteristic selected from size, shape, external surface texture and internal texture which is different from that of the particulate bait with which it is to be admixed. Preferably, the non-bait particulate food will be distinguishable from the particulate bait with which it is to be admixed by virtue of particle size. The use of such a flavoured non-bait particulate food in admixture with baited wheat grain has been found, in tests carried out on rats, to double the palatability of the bait particles.

DESCRIPTION OF EXPERIMENTS

A series of laboratory pen trials were carried out. In these trials, semi-wild rats (Rattus novegicus) and, separately, semi-wild mice (Mus domesticus) were used in a semi-wild environment.
In each case, the following test diets were provided for consumption by the rodents and, in all cases, a control diet is also provided. The amount of take by the rodents of the test diets and the control diet was monitored and rodent death was also monitored.
In the experiments, the palatability ratio of the diets under test was determined. The palatability ratio is defined as follows:-

$$\text{palatability ratio} - \frac{\text{total test bait eaten}}{\text{total control diet eaten}}$$

We prefer, for effective control in the field to be achieved, that the palatability ratio is at least 0.3 for rats and is at least 0.1 for mice.

EXPERIMENT 1

Test Diet 1

Cut cereal bait treated with difenacoum (Neosorexa Cut Wheat bait, Sorex Limited).

Test Diet 2

A mixture of cut cereal bait treated with difenacoum (Neosorexa Cut Wheat bait, Sorex Limited) and non-bait pellets (5% by weight based on total weight of bait pellets and non-bait pellets). The non-bait pellets comprised dried, extruded pellets (length about Icm, diameter about 4mm) containing about 95% by weight ground wheat, about 5% by weight dextrose and 300 ppm dried, powdered crustacean.
In the feeding experiments, the palatability of the test diets was assessed. This was done by determining the amount of test diet taken by the rodent and also the amount of control diet taken by the rodent. The palatability ratio of the test diet was determined as the amount of test diet taken divided by the amount of control diet taken. The results shown below are the average of ten tests.

| Rat | |
| --- | --- |
| Test Diet No. | Palatability Ratio |
| 1 | 1.42 |
| 2 | 3.61 |

| Mice | |
| --- | --- |
| Test Diet No. | Palatability Ratio |
| 1 | 0.67 |
| 2 | 1.52 |

The results obtained demonstrate that the palatability was increased (more than doubled) for both the rats and the mice by including non-bait particles flavoured with dried, powdered crustacean with the bait particles.
After the rodents had finished eating the Test Diet 2, it was found that the content of the non-bait particles in the mixture had been reduced from 5% by weight to less than 1% by weight. This was found for both the rats and the mice in the tests. However, in eating the Test Diet 2, the rodents had consumed double the amount of bait particles compared to Test Diet 1 .

EXPERIMENT 2

In this experiment, tests were carried out to investigate whether the increase in palatability demonstrated in EXPERIMENT 1 above is merely the result of the use of the flavouring agent. The palatability ratios shown in the results below were averaged from ten tests.

Test Diet 1

Cut cereal bait treated with difenacoum (Neosorexa Cut Wheat bait, Sorex Limited) identical to that used in Test Diet 1 in EXPERIMENT 1 except that it additionally contains 300 ppm dried, powdered crustacean.

Test Diet 2

This was identical to the Test Diet 2 used in EXPERIMENT 1 above.

| Test Diet No. | Palatability Ratio | |
|---|---|---|
| | Rats | Mice |
| 1 | 1.54 | 0.66 |
| 2 | 3.61 | 1 .52 |
| Statistical Analysis | p = 0.004 sig.diff. | p = 0.0008 sig.diff. |

The results show that the bait particles containing the dried powdered crustacean flavour are not as palatable to rats and mice as non-flavoured bait particles but used in admixture with non-bait particles flavoured with the dried powdered crustacean. Thus, the conclusion is that the crustacean flavour should be provided on a non-bait particle (used together with bait) rather than simply on the bait in order to increase the palatability of the bait significantly.

EXPERIMENT 3

In this experiment, tests were carried out to investigate whether the increase in palatability demonstrated in the earlier experiments is a result of merely mixing bait particles with non-bait particles (neither the bait particles nor the non-bait particles have added flavour) or the use of a different flavour on the non-bait particles. The palatability ratios shown below were averaged from ten tests.

Test Diet 1

A mixture of cut cereal bait treated with difenacoum (Neosorexa Cut Wheat bait, Sorex Limited) with dried extruded pellets (length about Icm; diameter about 4mm) containing about 95% by weight of ground wheat and about 5% by weight of dextrose with no added flavouring agent. The amount of non-bait pellets in the mixture was 5% by weight based on the total weight of the bait pellets and non-bait pellets.

Test Diet 2

This was the same as the Test Diet 2 used in EXPERIMENT 1 above.

| Test Diet No. | Palatability Ratio | |
|---|---|---|
| | Rats | Mice |
| 1 | 2.53 | 1 .34 |
| 2 | 3.61 | 1 .52 |
| Statistical Analysis | P=0.27 No sig .diff. | P=0.61 No sig .diff. |

The results show that, especially in rats, the crustacean flavour provided on the non-bait particles is essential to increase palatability of the bait particles.

EXPERIMENT 4

This experiment was carried out to study the effect of using a particulate mixture in palatability tests on rats and mice in which the non-bait particles which contain dextrose but no additional flavouring agent have approximately the same size as the bait particles (although they do have a slightly different shape compared to the bait particles). The test diets used in this experiment were as follows:

Test Diet 1

This was identical to Test Diet 1 in EXPERIMENT 1 above.

Test Diet 2

A mixture of cut cereal bait treated with difenacoum (Neosorexa cut wheat bait, Sorex Limited) and non-bait pellets which had been ground to approximately the same size as the cut cereal bait (2.5% by weight based on the total weight of the cut wheat bait and the ground non-bait pellets). The non-bait pellets were produced as described in Test Diet 2 of EXPERIMENT 1 except that no dried, powdered crustacean was included. After the pellets had been dried, they were subjected to grinding to reduce the pellet size such that it was approximately the same as that of the cut cereal bait.

Test diet 3

A mixture of cut cereal bait and ground non-bait pellets as described above in Test Diet 2 of this experiment except that the mixture contained 5% of the ground non-bait pellets (based on the total weight of cut cereal bait and ground non-bait particles).

In the feeding experiments carried out using rats and mice, the palatability of the test diets was assessed. This was done by determining the amount of test diet taken by the rodent and also the amount of control diet taken by the rodent. The palatability ratio of the test diet was determined as the amount of test diet taken divided by the amount of control diet taken. The palatability ratios shown in the table below were averaged from ten tests. The results were also subjected to statistical analysis.

| Study No. | | Palatability Ratio | |
|---|---|---|---|
| | | Rats | Mice |
| 1. | TEST DIET 1<br>TEST DIET 2 | 1.02<br>0.95 | 0.67<br>1.06 |
| | Statistical Analysis | P = 0.92 | P = 0.48 |
| 2. | TEST DIET 1<br>TEST DIET 3 | 1.02<br>1.22 | 1.05<br>1.58 |
| | Statistical Analysis | P = 0.40 | P: 0.49 |

The results obtained in this experiment indicate that the presence of the ground non-bait particles in the mixture with the cut cereal bait did slightly increase palatability in the 5% addition level for rats and in both the 2.5% and 5% addition levels for mice. Statistical analysis of these results, however, indicates that the incorporation of the ground non-bait pellets did not give rise to significantly increased palatability.

EXPERIMENT 5

This experiment was carried out on mice only using canary seed bait particles and using 'mini' non-bait particles. The test diets used in this experiment were as follows:

Test Diet 1

Canary seed treated with calciferol (as rodentically-active agent).

Test Diet 2

Canary seed treated with calciferol (as rodentically-active agent) and 300 ppm dried, powdered crustacean.

Test Diet 3

A mixture of canary seed treated with calciferol with 'mini' dried and extruded non-bait pellets (5% by weight based on the total weight of the canary seed bait and 'mini' non-bait pellets).

The 'mini' non-bait pellets comprised 95% by weight ground wheat, about 5% by weight dextrose and 300 ppm dried, powdered crustacean. The mean length of the "mini" pellets, taken from a random sample of ten "mini" pellets ranging from 2.4mm to 4.2mm in length, was 3.67 mm. The mean diameter of the "mini" pellets, taken from a random sample of ten "mini" pellets ranging from 2.3 mm to 2.4mm in diameter, was 2.33 mm.

The palatability ratios were determined in accordance with the procedure described in EXPERIMENT 4. The results shown below are, in each case, the average of ten tests.

| Study No. | TEST DIET | Palatability Ratio |
|---|---|---|
| 1 | 1 | 0.34 |
| 2 | 2 | 0.36 |
| 3 | 3 | 1.13 |

Statistical Analysis

| Study 1 | vs | Study 2, | $P = 0.93$ |
|---|---|---|---|
| Study 1 | vs | Study 3, | $P = 0.14$ |
| Study 3 | vs | Study 2, | $P = 0.20$ |

The results obtained demonstrate that although palatability was not increased by incorporating the flavouring agent into the canary seed bait particles, palatability was increased using TEST DIET 3, a mixture of bait particles and flavoured non-bait particles.

EXPERIMENT 6: The test diets used in this experiment were:

Test Diet 1

Cut cereal bait treated with difenacoum (Neosorexa Cut Wheat bait, Sorex Limited).

Test Diet 2

A mixture of bait (Test Diet 1, as described above) and non-bait pellets. The amount of non-bait pellets in the mixture was 5% by weight (based on the combined weight of the bait and the non-bait pellets). The non-bait pellets comprised dried, extruded pellets (length of about Icm, diameter of about 4mm) containing about 95% by weight ground wheat, about 5% by weight dextrose and 300 ppm dried, powdered crustacean.

The feeding experiment involved 20 rats. 10 rats were provided access to Test Diet 1 and 10 rats were provided access to Test Diet 2. The daily take of the diets by the rats was measured and the amount of active ingredient ingested per rat was calculated.

The number of rats that had ingested a lethal dose (2 x LD50 dose) by each day was also calculated. The results are shown in the following table.

| % Rats ingested a lethal dose | | |
| --- | --- | --- |
| Day | Test Diet 1 | Test Diet 2 |
| 0 | 0 | 0 |
| 1 | 0 | 60 |
| 2 | 80 | 100 |
| 3 | 90 | 100 |
| 4 | 100 | 100 |

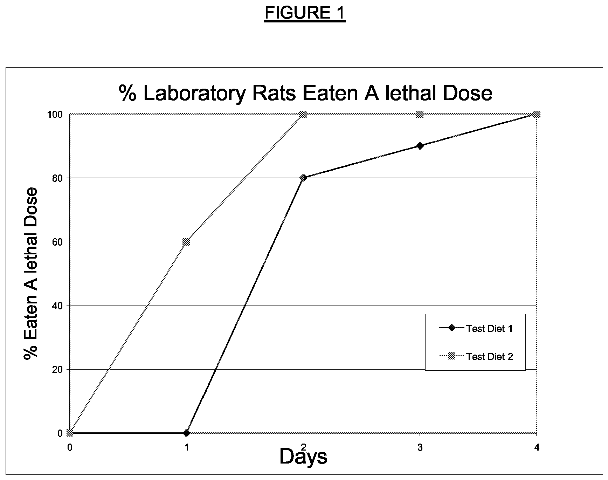

The results are also shown graphically in Figure 1.

As indicated above, both baits resulted in all rats consuming a lethal dose. However, the time taken for the rats to eat a lethal dose (2 x LD50) of the bait was much quicker with Test Diet 2 (containing the flavoured non-bait pellets) than with Test Diet 1 (bait only). The use of particulate mixtures of bait and non-bait pellets according to the invention is expected to lead to quicker control in the field.

## Claims

1.    A particulate mixture for use in the control of rodents which comprises a mixture of a plurality of bait particles and a plurality of non-bait particles, wherein each bait particle comprises matter edible by a rodent and a rodenticide and wherein each non-bait particle comprises matter edible by a rodent and has a flavour different from the flavour of a bait particle and wherein the non-bait particles are distinguished from the bait particles by at least one physical characteristic selected from size, shape, surface texture and internal texture,
wherein the non-bait particles are present in the mixture in an amount in the range of from 2.5 to 10% by weight, preferably in the range of from 3 to 7% by weight, based on the combined weight of the bait particles and non-bait particles,
wherein the non-bait particles are extruded pellets comprising ground cereals,
wherein the non-bait particles contain from 5 to 4000 ppm of flavouring agent,
wherein the bait particles are cereal based, typically selected from whole wheat grain, cut wheat grain, oats, canary seed and cereal based pellets treated with a rodenticide.

2.    A particulate mixture according to claim 1, wherein the amount of non-bait particles in the mixture is about 5% by weight based on the combined weight of bait particles and non-bait particles.

3.    A particulate mixture according to any one of claims 1 to 2, wherein the rodenticide is difenacoum or vitamin D.

4.    A particulate mixture according to any one of claims 1 to 3, wherein the non-bait particles are extruded pellets comprising ground wheat.

5.    A particulate mixture according to claim 4, wherein the extruded pellets have a length of from 8 to 12 mm and a diameter of about 4 mm.

6.    A particulate mixture according to any one of claims 1 to 5, wherein the non-bait particles comprise a flavour component selected from chocolate, dried powdered crustacean, yeast, faeces, fish meal, meat, berries and mixtures of two or more of these.

7.    A particulate mixture according to claim 6, wherein the flavour component is selected from chocolate, dried powdered crustacean and mixtures thereof.

8.    A particulate mixture according to claim 7, wherein the flavour component comprises dried powdered crustacean.

9.    A particulate mixture according to claim 6, wherein the flavour component is present at a concentration in the range of from 150 to 900 ppm based on the weight of the non-bait particles.

10.   A particulate mixture according to claim 9, wherein the flavour component is present at a concentration of about 300 ppm based on the weight of the non-bait particles.

11. A method of increasing the consumption of bait particles by a rodent which bait particles comprise matter edible by a rodent and a rodenticide comprising mixing the bait particles to be presented to the rodent with non-bait particles which comprise matter edible by a rodent and having a flavour different from the flavour of the bait particles and wherein the non-bait particles are distinguished from the bait particles by at least one physical characteristic selected from size, shape, surface texture and internal texture,
wherein the non-bait particles are present in the mixture in an amount in the range of from 2.5 to 10% by weight, preferably in the range of from 3 to 7% by weight, based on the combined weight of the bait particles and non-bait particles,
wherein the non-bait particles are extruded pellets comprising ground cereals,
wherein the the non-bait particles contain from 5 to 4000 ppm of flavouring agent,
wherein the bait particles are cereal based, typically selected from whole wheat grain, cut wheat grain, oats, canary seed and cereal based pellets treated with a rodenticide.


**Patentansprüche**

1. Partikelgemisch zur Verwendung bei der Bekämpfung von Nagern, umfassend ein Gemisch von einer Vielzahl von Köderpartikeln und einer Vielzahl von Nichtköder-Partikeln, wobei jedes Köderpartikel für einen Nager verzehrbares Material und ein Rodentizid umfasst und wobei jedes Nichtköder-Partikel für einen Nager verzehrbares Material umfasst und ein Aroma aufweist, das von dem Aroma eines Köderpartikels verschieden ist, und wobei sich die Nichtköder-Partikel von den Köderpartikeln in wenigstens einer physikalischen Eigenschaft ausgewählt aus Größe, Form, Oberflächentextur und interner Textur unterscheiden,
wobei die Nichtköder-Partikel in dem Gemisch in einer Menge in dem Bereich von 2,5 bis 10 Gew.-%, vorzugsweise in dem Bereich von 3 bis 7 Gew.-%, bezogen auf das kombinierte Gewicht der Köderpartikel und Nichtköder-Partikel, vorhanden sind,
wobei die Nichtköder-Partikel extrudierte Pallets sind, die gemahlenes Getreide umfassen,
wobei die Nichtköder-Partikel von 5 bis 4000 ppm Aromastoff enthalten,
wobei die Köderpartikel auf Getreidebasis, typischerweise ausgewählt aus ganzen Weizenkörnern, geschnittenen Weizenkörnern, Hafer, Kanariensaat und Pellets auf Getreidebasis, behandelt mit einem Rodentizid, sind.

2. Partikelgemisch gemäß Anspruch 1, wobei die Menge an Nichtköder-Partikeln in dem Gemisch etwa 5 Gew.-%, bezogen auf das kombinierte Gewicht der Köderpartikel und Nichtköder-Partikel, beträgt.

3. Partikelgemisch gemäß einem der Ansprüche 1 bis 2, wobei das Rodentizid Difenacoum oder Vitamin D ist.

4. Partikelgemisch gemäß einem der Ansprüche 1 bis 3, wobei die Nichtköder-Partikel extrudierte Pellets sind, die gemahlenen Weizen umfassen.

5. Partikelgemisch gemäß Anspruch 4, wobei die extrudierten Pellets eine Länge von 8 bis 12 mm und einen Durchmesser von etwa 4 mm aufweisen.

6. Partikelgemisch gemäß einem der Ansprüche 1 bis 5, wobei die Nichtköder-Partikel eine Aromakomponente ausgewählt aus Schokolade, getrockneten gepulverten Krustentieren, Hefe, Fäzes, Fischmehl, Fleisch, Beeren und Gemischen von zwei oder mehreren davon umfassen.

7. Partikelgemisch gemäß Anspruch 6, wobei die Aromakomponente ausgewählt ist aus Schokolade, getrockneten gepulverten Krustentieren und Gemischen davon.

8. Partikelgemisch gemäß Anspruch 7, wobei die Aromakomponente getrocknete gepulverte Krustentiere umfasst.

9. Partikelgemisch gemäß Anspruch 6, wobei die Aromakomponente in einer Konzentration in dem Bereich von 150 bis 900 ppm, bezogen auf das Gewicht der Nichtköder-Partikel, vorhanden ist.

10. Partikelgemisch gemäß Anspruch 9, wobei die Aromakomponente in einer Konzentration von etwa 300 ppm, bezogen auf das Gewicht der Nichtköder-Partikel, vorhanden ist.

**11.** Verfahren zum Erhöhen der Aufnahme von Köderpartikeln durch einen Nager, wobei die Köderpartikel für einen Nager verzehrbares Material und ein Rodentizid umfassen, umfassend Mischen der Köderpartikel, die dem Nager vorgelegt werden sollen, mit Nichtköder-Partikeln, die für einen Nager verzehrbares Material umfassen und ein Aroma aufweisen, das von dem Aroma der Köderpartikel verschieden ist, und wobei sich die Nichtköder-Partikel von den Köderpartikeln in wenigstens einer physikalischen Eigenschaft ausgewählt aus Größe, Form, Oberflächentextur und interner Textur unterscheiden,

wobei die Nichtköder-Partikel in dem Gemisch in einer Menge in dem Bereich von 2,5 bis 10 Gew.-%, vorzugsweise in dem Bereich von 3 bis 7 Gew.-%, bezogen auf das kombinierte Gewicht der Köderpartikel und Nichtköder-Partikel, vorhanden sind,

wobei die Nichtköder-Partikel extrudierte Pallets sind, die gemahlenes Getreide umfassen,

wobei die Nichtköder-Partikel von 5 bis 4000 ppm Aromastoff enthalten,

wobei die Köderpartikel auf Getreidebasis, typischerweise ausgewählt aus ganzen Weizenkörnern, geschnittenen Weizenkörnern, Hafer, Kanariensaat und Pellets auf Getreidebasis, behandelt mit einem Rodentizid, sind.

## Revendications

**1.** Mélange particulaire pour une utilisation dans le contrôle de rongeurs, comprenant un mélange d'une pluralité de particules d'appât et une pluralité de particules autres que d'appât, où chaque particule d'appât comprend des matières consommables par un rongeur et un rodenticide et où chaque particule autre que d'appât comprend des matières consommables par un rongeur et possède un arôme différent de l'arôme d'une particule d'appât, et où les particules autres que d'appât se distinguent des particules d'appât par au moins une caractéristique physique choisie parmi la taille, la forme, la texture de surface et la texture interne,

dans lequel les particules autres que d'appât sont présentes dans le mélange selon une quantité dans la plage allant de 2,5 à 10% en poids, préférablement dans la plage allant de 3 à 7% en poids, sur la base du poids combiné des particules d'appât et des particules autres que d'appât,

où les particules autres que d'appât sont des pellets extrudés comprenant des céréales broyées,

où les particules autres que d'appât contiennent de 5 à 4000 ppm d'agent aromatisant,

où les particules d'appât sont à base de céréales, choisies typiquement parmi des grains de blé entier, des grains de blé coupés, de l'avoine, des graines des canaris et des pellets à base de céréales traités par un rodenticide.

**2.** Mélange particulaire selon la revendication 1, dans lequel la quantité de particules autres que d'appât dans le mélange est d'environ 5% en poids, sur la base du poids combiné des particules d'appât et des particules autres que d'appât.

**3.** Mélange particulaire selon l'une quelconque des revendications 1 à 2, dans lequel le rodenticide est le difénacoum ou la vitamine D.

**4.** Mélange particulaire selon l'une quelconque des revendications 1 à 3, dans lequel les particules autres que d'appât sont des pellets extrudés comprenant du blé broyé.

**5.** Mélange particulaire selon la revendication 4, dans lequel les pellets extrudés possèdent une longueur allant de 8 à 12 mm et un diamètre d'environ 4 mm.

**6.** Mélange particulaire selon l'une quelconque des revendications 1 à 5, dans lequel les particules autres que d'appât comprennent un composant d'arôme choisi parmi le chocolat, des crustacés séchés en poudre, de la levure, des fèces, de la farine de poisson, de la viande, des baies et des mélanges de deux, ou plus, parmi ceux-ci.

**7.** Mélange particulaire selon la revendication 6, dans lequel le composant d'arôme est choisi parmi le chocolat, des crustacés séchés en poudre, et des mélanges de ceux-ci.

**8.** Mélange particulaire selon la revendication 7, dans lequel le composant d'arôme comprend des crustacés séchés en poudre.

**9.** Mélange particulaire selon la revendication 6, dans lequel le composant d'arôme est présent selon une concentration dans la plage allant de 150 à 900 ppm, sur la base du poids des particules autres que d'appât.

**10.** Mélange particulaire selon la revendication 9, dans lequel le composant d'arôme est présent selon une concentration d'environ 300 ppm, sur la base du poids des particules autres que d'appât.

11. Méthode destinée à augmenter la consommation de particules d'appât par un rongeur, lesquelles particules d'appât comprennent des matières consommables par un rongeur et un rodenticide, comprenant le mélange des particules d'appât devant être présentées au rongeur avec des particules autre que d'appât qui comprennent des matières consommables par un rongeur et possèdent un arôme différent de l'arôme des particules d'appât, et où les particules autres que d'appât se distinguent des particules d'appât par au moins une caractéristique physique choisie parmi la taille, la forme, la texture de surface et la texture interne,
dans laquelle les particules autres que d'appât sont présentes dans le mélange selon une quantité dans la plage allant de 2,5 à 10% en poids, préférablement dans la plage allant de 3 à 7% en poids, sur la base du poids combiné des particules d'appât et des particules autres que d'appât,
où les particules autres que d'appât sont des pellets extrudés comprenant des céréales broyées,
où les particules autres que d'appât contiennent de 5 à 4000 ppm d'agent aromatisant,
où les particules d'appât sont à base de céréales, choisies typiquement parmi des grains de blé entier, des grains de blé coupés, de l'avoine, des graines des canaris et des pellets à base de céréales traités par un rodenticide.

## FIGURE 1

% Laboratory Rats Eaten A lethal Dose

## REFERENCES CITED IN THE DESCRIPTION

**Patent documents cited in the description**

- JP 2002179502 A
- WO 199422297 A
- EP 1279334 A
- US 2004031189 A1